# EUROPÄISCHE PATENTSCHRIFT

(11) **EP 1 712 329 B1**
(45) Veröffentlichungstag und Bekanntmachung des Hinweises auf die Patenterteilung: **27.02.2008**
(21) Anmeldenummer: 05008034.0
(22) Anmeldetag: 13.04.2005
(51) Int. Cl.: B23Q 7/14, B23Q 41/02

(54) **Fertigungs-Anlage mit einer Werkstück-Lade-Transport-Einrichtung**
Production line with a workpiece load and transport device
Ligne de production avec système de charge et transport de pièce

(43) Veröffentlichungstag der Anmeldung: 18.10.2006
(73) Patentinhaber: Cross Hüller GmbH, 71636 Ludwigsburg (DE)
(72) Erfinder: Stengele, Gerald, 71636 Ludwigsburg (DE); Nussbaum, Jörg-Michael, Dr., 71638 Ludwigsburg (DE); Corbean, Ioan-Mircea, 71672 Marbach (DE)
(74) Vertreter: Rau, Manfred

(56) Entgegenhaltungen:
- EP-A- 1 084 794
- DE-A1- 3 146 630
- DE-A1- 19 756 278
- US-A- 4 781 512
- US-A1- 2003 172 510

## Beschreibung

Die Erfindung betrifft eine Fertigungs-Anlage nach dem Oberbegriff des Anspruches 1.

Derartige in der Praxis allgemein verbreitete, z.B. aus der DE 197 56 278 A bekannte Fertigungs-Anlagen, die auch als Fertigungs-Straßen bezeichnet werden, weisen mehrere nebeneinander angeordnete Bearbeitungs-Maschinen auf, denen Werkstücke über eine Lade-Transport-Einrichtung und eine als Lade-Einrichtung dienende Übergabe-Einrichtung zugeführt bzw. entnommen werden. Diese bekannten Fertigungs-Anlagen sind konstruktiv sehr aufwändig. Unter anderem sind die Werkstückgreifer um zwei Achsen schwenkbar. Hierdurch bedingt wird auch das Aufnehmen und Absetzen von Werkstücken bzw. Werkstück-Trägern aufwändig.

Ähnliche Fertigungs-Anlagen sind aus der EP 1 084 794 A1 und der WO 02/00388A1 bekannt.

Aus der US-PS 4,781,512 A (entsprechend DE 36 86 476 T2) ist es bekannt, gabelförmige Palettengreifer, also Werkstück-Träger, einzusetzen, die allerdings unter angehobene Werkstück-Träger greifen und diese dann erst in eine Bearbeitungs-Maschine eingeben bzw. aus dieser herausnehmen.

Der Erfindung liegt daher die Aufgabe zugrunde, die Fertigungs-Anlage der gattungsgemäßen Art in ihrem Aufbau zu vereinfachen.

Diese Aufgabe wird erfindungsgemäß durch die Merkmale im Kennzeichnungsteil des Anspruches 1 gelöst. Der Werkstück-Greifer wird nur um eine einzige Achse geschwenkt; er ist also konstruktiv und kinematisch sehr einfach aufgebaut. In der zumindest im Wesentlichen horizontalen Position wird er be- oder entladen, das heißt er nimmt ein zu bearbeitendes Werkstück auf, das an eine Bearbeitungs-Maschine übergeben wird. In gleicher Weise wird ein bearbeitetes Werkstück an der Bearbeitungs-Maschine übernommen und abtransportiert. Der Transport erfolgt in hochgeschwenktem Zustand der Werkstück-Greifer, so dass Kollisionen ausgeschlossen sind. Durch die Ausgestaltung der Zuführ-Transport-Einrichtung, der Abführ-Transport-Einrichtung, der Speicher-Transport-Einrichtung und der Übergabe-Transport-Einrichtung und der hiermit zusammenwirkenden Lade-Einrichtung ist in sehr einfacher Weise und auf sehr vielfältige Weise eine Zuführung von zu bearbeitenden Werkstücken, ein Umsetzen dieser Werkstücke und ein Abführen der bearbeiteten Werkstücke möglich. Die geschilderten Transport-Einrichtungen können sehr einfach ausgebildet sein. Es lassen sich sowohl parallele als auch sequentielle Bearbeitungen durchführen, das heißt es können gleichzeitig an mehreren Bearbeitungs-Maschinen an verschiedenen Werkstücken die gleichen Bearbeitungsvorgänge durchgeführt werden; es können aber auch nacheinander an den Bearbeitungs-Maschinen am selben Werkstück verschiedene Bearbeitungsvorgänge durchgeführt werden.

Durch die Weiterbildung nach Anspruch 2 wird erreicht, dass die Aufnahme eines Werkstück-Trägers in den Werkstück-Greifer bzw. dessen Entnahme besonders einfach erfolgt.

Durch die Weiterbildung nach Anspruch 3 wird erreicht, dass der Werkstück-Greifer als sogenannter passiver Werkstück-Greifer ausgebildet sein kann, der also keine eigenen Greifbewegungen ausführen können muss. Grundsätzlich kann mit der erfindungsgemäß ausgestalteten Anlage auch eine Beschickung von ortsfesten Werkstück-Tischen erfolgen; es können also grundsätzlich auch Bearbeitungs-Maschinen eingesetzt werden, bei denen die Werkzeug-Spindel die Bewegungen in der z-Richtung ausführt. Insbesondere die Ausgestaltung nach Anspruch 3 und 4, bei der der Werkstück-Greifer als ein sogenannter passiver Greifer ausgebildet ist, macht die Weiterbildung nach Anspruch 5 besonders vorteilhaft. Der Transport des Werkstücks vom herabgeschwenkten Werkstück-Greifer zur Bearbeitungsstelle in der Bearbeitungsmaschine und zurück erfolgt hierbei mittels des Werkstück-Schlittens. Hierfür sind also keine gesonderten Maßnahmen vorgesehen.

Durch die Weiterbildung nach Anspruch 6 wird erreicht, dass ein Werkstück-Greifer den Transport zu bearbeitender Werkstücke und der andere Werkstück-Greifer zum Transport bearbeiteter Werkstücke einsetzbar ist. Dadurch können die Stillstandszeiten, also die bearbeitungsfreien Zeiten der Bearbeitungs-Maschinen, minimiert werden.

Die Weiterbildung nach Anspruch 7 ist besonders vorteilhaft, weil hierbei die Transportbewegung der verschiedenen Transport-Einrichtungen einerseits und die Verschiebbarkeit des Werkzeug-Schlittens der jeweiligen Bearbeitungs-Maschine andererseits dazu ausgenutzt werden, die Übergabe des Werkstücks auf den Werkstück-Greifer bzw. die Entnahme hieraus durchzuführen. Anspruch 8 und Anspruch 9 geben hierfür vorteilhafte konstruktive Einzelheiten wieder.

Die weiteren Unteransprüche geben vorteilhafte weitere Ausgestaltungen und Möglichkeiten der Erfindung wieder.

Weitere Merkmale, Vorteile und Einzelheiten der Erfindung ergeben sich aus der nachfolgenden Beschreibung eines Ausführungsbeispieles anhand der Zeichnung. Es zeigt:
- Fig. 1: eine Fertigungs-Anlage nach der Erfindung in Draufsicht,
- Fig. 2: eine Teil-Draufsicht auf die Fertigungs-Anlage in gegenüber Fig. 1 vergrößertem Maßstab,

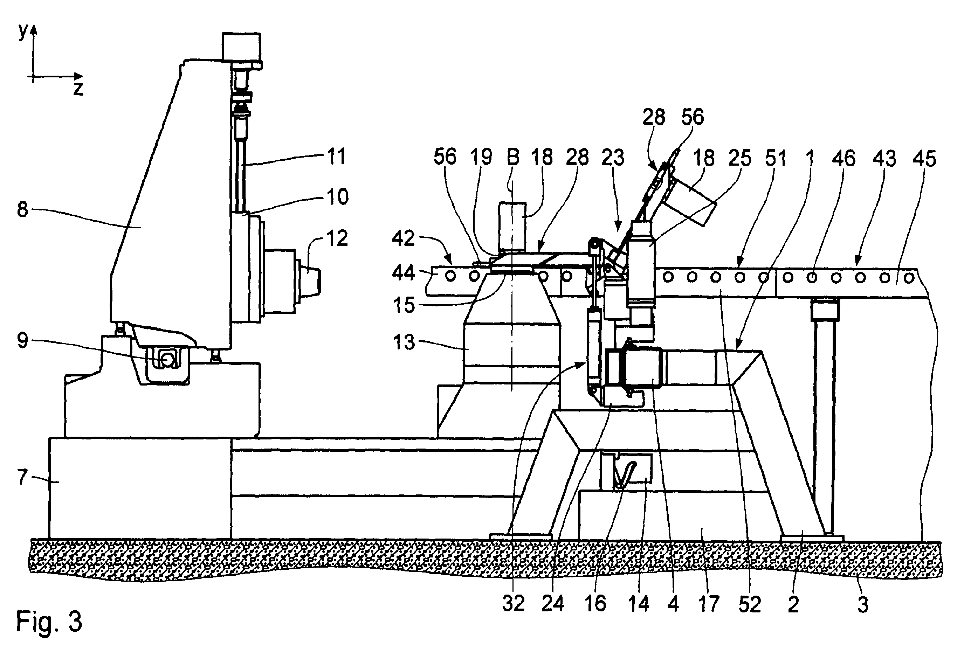

- Fig. 3: eine Seitenansicht einer Bearbeitungs-Maschine mit einer LadeEinrichtung,
- Fig. 4: eine vergrößerte Teildarstellung aus Fig. 3,

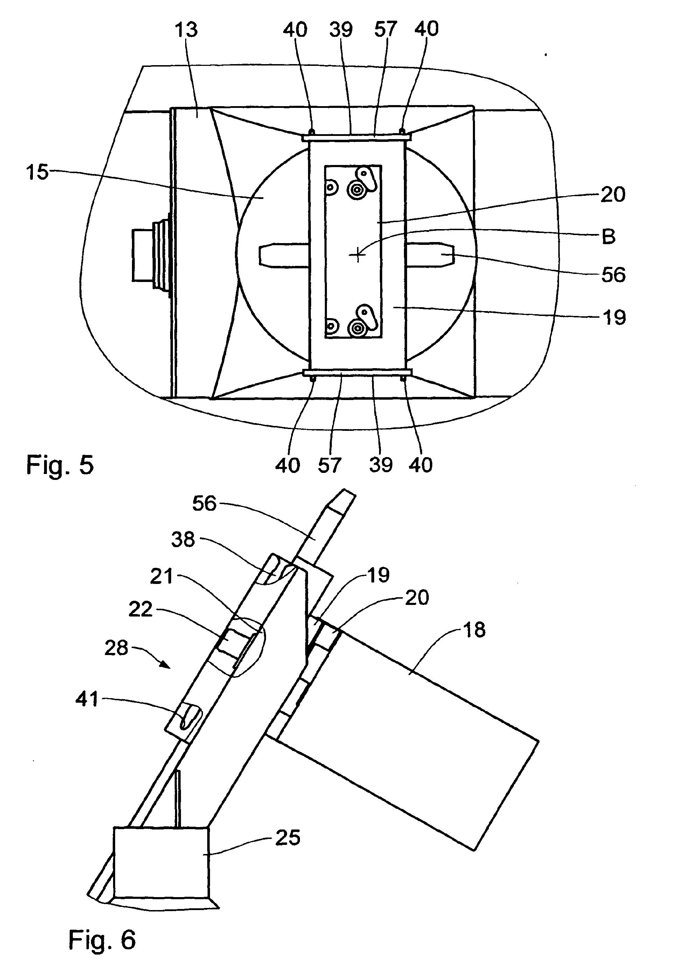

- Fig. 5: eine vergrößerte Teildarstellung aus Fig. 1 mit einem Werkstück-Schlitten mit einer Adapter-Platte aber ohne Werkstück,
- Fig. 6: eine Teil-Seitenansicht eines Werkstück-Greifers mit Werkstück in teilweise aufgebrochener Darstellung und

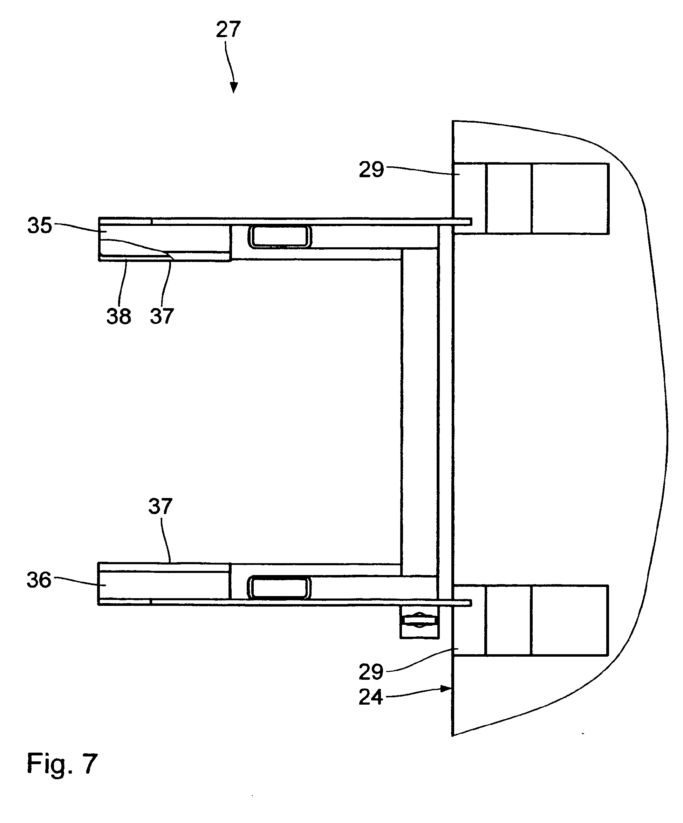

- Fig. 7: eine Draufsicht auf einen Werkstück-Greifer in teilweise aufgebrochener Darstellung.

Die in der Zeichnung dargestellte Fertigungsanlage weist eine Lade-Transport-Einrichtung 1 auf, die eine über Stützen 2 auf dem Boden 3 abgestützte Transport-Schiene 4 aufweist.

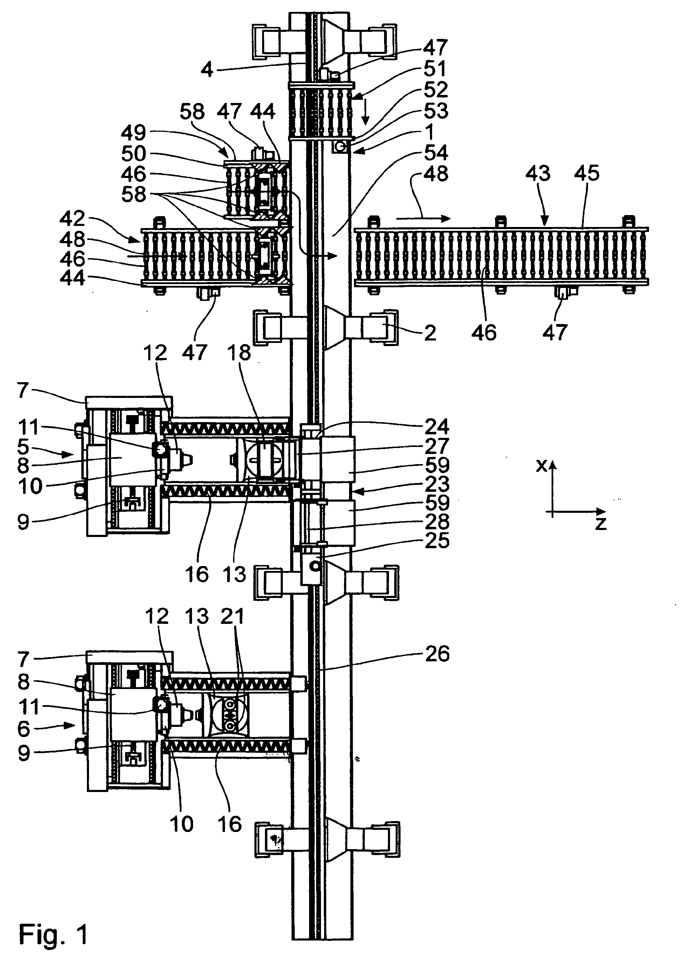

Auf einer - in Fig. 1 der linken - Seite der Lade-Transport-Einrichtung 1 sind Bearbeitungs-Maschinen 5, 6 angeordnet, bei denen es sich um Werkzeug-Maschinen handelt. Diese weisen ein Maschinen-Gestell 7 auf, auf dem ein x-Schlitten 8 horizontal und parallel zur Längsrichtung der Transport-Schiene 4 mittels eines Kugel-Roll-Spindel-Antriebs 9 verfahrbar gelagert ist. An der der Lade-Transport-Einrichtung 1 zugewandten Seite des x-Schlittens 8 ist an diesem ein y-Schlitten 10 vertikal mittels eines Kugel-Roll-Spindel-Antriebs 11 vertikal verschiebbar gelagert. Am y-Schlitten 10 ist eine Werkzeug-Spindel 12 angeordnet, die in z-Richtung, also horizontal und quer zur x-Richtung, also senkrecht zur Längsrichtung der Transport-Schiene 4, nicht verschiebbar ist. Auf dem Maschinen-Gestell 7 ist ein Werkstück-Schlitten 13 in z-Richtung verschiebbar angeordnet, der mittels eines Kugel-Roll-Spindel-Antriebs 14 in z-Richtung antreibbar ist. Auf dem Werkstück-Schlitten 13 ist ein Werkstück-Tisch 15 angeordnet, der um eine vertikale, also zur y-Richtung parallele B-Achse oder um eine horizontale, parallel zur Transport-Schiene 4 und zur x-Richtung parallele nur angedeutete A-Achse schwenkbar ist. Seitlich unterhalb des Werkzeug-Schlittens 13 sind am Maschinen-Gestell 7 als Spiralförderer ausgebildete Späne-Förderer 16 angebracht, die die Späne zu einer zentralen, unterhalb der Transport-Schiene 4 angeordnete Späne-Förder-Einrichtung 17 fördern

Auf dem jeweiligen Werkstück-Tisch 15 werden zu bearbeitende Werkstücke 18 aufgespannt. Hierzu sind als Adapter-Platten 19 ausgebildete Werkstück-Träger vorgesehen, auf denen jeweils eine Werkstück-Aufnahme 20 angeordnet ist. Auf diesen Adapter-Platten 19 wird das jeweilige Werkstück 18 exakt befestigt. Derartige Adapter-Platten 19 sind der Art nach bekannt und zwar beispielsweise aus EP 1 260 304 B 1 (entsprechend US 6,619,641 B2).

Die Adapter-Platten 19 werden auf dem Werkstück-Tisch 15 des Werkstück-Schlittens 13 mittels sogenannter Nullpunkt-Spanner 21 aufgespannt, die nach Art einer Werkzeugspanneinrichtung ausgebildet sind und jeweils einen an der Unterseite der Adapter-Platte 19 angebrachten hinterschnittenen Spann-Bolzen 22 fest einspannen und nach unten ziehen. Derartige Nullpunkt-Spanner 21 sind in der Praxis allgemein verbreitet und beispielsweise aus US 6,641,128 B2 und DE 199 20 291 A1 bekannt.

Die Zuführung zu bearbeitender Werkstücke 18 und der Abtransport bearbeiteter Werkstücke 18 zu bzw. von den Bearbeitungs-Maschinen 5, 6 erfolgt mittels der Lade-Transport-Einrichtung 1. Hierzu ist auf der Transport-Schiene 4 eine Lade-Einrichtung 23 verschiebbar angeordnet. Diese weist einen Lauf-Wagen 24 auf, der die Transport-Schiene 4 etwa C-förmig umgreift und an deren Ober- und Unterseite gegenüber dieser abgestützt ist. Am Lauf-Wagen 24 ist ein Fahr-Antriebs-Motor 25 angebracht. Die Antriebs-Übertragung zwischen Motor 25 und Schiene 4 erfolgt über eine auf der Transport-Schiene 4 angebrachte Zahnstange 26. Auf dem Lauf-Wagen 24 sind - in Längsrichtung der Transport-Schiene 4 hintereinander - zwei Werkstück-Greifer 27, 28 in Lagerböcken 29 um Schwenk-Achsen 30 schwenkbar gelagert, die parallel zur Transport-Schiene 4 verlaufen. Zum voneinander unabhängigen Verschwenken jedes Werkstück-Greifers 27 bzw. 28 ist jeweils ein Schwenk-Antrieb 31, 32 vorgesehen, bei dem es sich um einen hydraulisch beaufschlagbaren Kolben-Zylinder-Antrieb handelt. Dessen Zylinder 33 ist an der den Bearbeitungs-Maschinen 14, 15 zugewandten Seite des Lauf-Wagens 24 angelenkt. Die nach oben aus dem Zylinder 33 herausgeführte Kolbenstange 34 ist am Werkstück-Greifer 27 bzw. 28 angelenkt. In eingefahrenem Zustand der Kolbenstange 34 befindet sich der jeweilige Greifer 27 bzw. 28 in einer heruntergeschwenkten, im Wesentlichen horizontalen, zur Bearbeitungs-Maschine 5 bzw. 6 hin zeigenden Position. Bei aus dem Zylinder 33 ausgefahrener Kolbenstange 34 befindet sich der Werkstück-Greifer 27 bzw. 28 in einer gegenüber der herabgeschwenkten Position um etwa 120° über die Vertikale hinausgeschwenkten, hochgeschwenkten Position. In der Zeichnung sind der Werkstück-Greifer 27 in der herabgeschwenkten Übergabe- und Entnahme-Position und der Werkstück-Greifer 28 in der geschilderten hochgeschwenkten Transport-Position dargestellt.

Jeder Werkstück-Greifer 27, 28 ist gabelförmig ausgebildet, und zwar in Form einer im herabgeschwenkten Zustand zur jeweiligen Bearbeitungs-Maschine 5, 6 offenen Gabel. Er weist zwei zueinander parallele Arme 35, 36 auf, die an ihren einander zugewandten Innenseiten 37 mit je einer Nut 38 versehen sind, die zum freien Ende des jeweiligen Armes 35 bzw. 36 hin offen ist.

An den einander gegenüberliegenden Längsseiten 39 der Adapter-Platte 19 sind Positionier-Stifte 40 angebracht, die der jeweiligen Nut 38 angepasst sind. Wenn eine Adapter-Platte 19 in einem Werkstück-Greifer 27 bzw. 28 aufgenommen ist, befinden sich die Positionier-Stifte 40 in den Nuten 38. Beim Hochschwenken des jeweiligen Greifers 27 bzw. 28 rutscht der Träger 19 so weit in den Greifer 27 bzw. 28 hinein, bis jeweils ein Positionier-Stift 40 an dem als Anschlag 41 dienenden Ende der Nut 38 anliegt.

Die Zuführung zu bearbeitender Werkstücke 18 zur Lade-Transport-Einrichtung 1 erfolgt mittels einer Zuführ-Transport-Einrichtung 42; der Abtransport bearbeiteter Werkstücke 18 von der Lade-Transport-Einrichtung 1 erfolgt mittels einer Abführ-Transport-Einrichtung 43. Die beiden Transport-Einrichtungen 42, 43 sind als Rollen-FörderEinrichtungen ausgebildet, das heißt sie weisen auf jeweils einem gegenüber dem Boden 3 abgestützten Gestell 44 bzw. 45 hintereinander eine große Zahl von Transport-Rollen 46 auf, die mittels jeweils eines Motors 47 drehangetrieben werden und zwar in einer gleichgerichteten Transport-Richtung 48.

Seitlich der Zuführ-Transport-Einrichtung 42, und zwar auf der der nächstgelegenenen Bearbeitungs-Maschine 5 abgewandten Seite, ist neben der Lade-Transport-Einrichtung 1 eine Speicher-Transport-Einrichtung 49 angeordnet, die in gleicher Weise ausgebildet ist wie die Transport-Einrichtungen 42, 43, das heißt sie weist ein am Boden 3 abgestütztes Gestell 50 und mittels eines Motors 47 angetriebene Transport-Rollen 46 auf.

Diese Speicher-Transport-Einrichtung 49 ist ortsfest angeordnet. Der seitliche Abstand der Speicher-Transport-Einrichtung 49 von der Zuführ-Transport-Einrichtung 42 entspricht dem seitlichen Abstand der Werkstück-Greifer 27, 28 in Richtung der Transport-Schiene 4. Weiterhin ist eine Übergabe-Transport-Einrichtung 51 vorgesehen, die ein rahmenartiges Gestell 52 aufweist, in dem Transport-Rollen 46 drehbar gelagert sind, die mittels eines Motors 47 drehangetrieben werden. Alle Transport-Rollen 46 sind parallel zueinander in der Horizontalen angeordnet. Die Übergabe-Transport-Einrichtung 51 ist nicht gegenüber dem Boden 3 abgestützt, sondern auf der Transport-Schiene 4 in gleicher Weise wie der Lauf-Wagen 24 verfahrbar gelagert, wobei der Fahrantrieb mittels eines Verfahr-Motors 53 erfolgt. Die Übergabe-Transport-Einrichtung 51 ist zwischen drei Stellungen verfahrbar, nämlich einer ersten Ruheposition, die in Fig. 1 dargestellt ist, einer zweiten Speicher-Position vor der Speicher-Transport-Einrichtung 49 und einer dritten Abführposition vor der Abführ-Transport-Einrichtung 43, also in der Lücke 54 zwischen den Transport-Einrichtungen 42, 43.

Wie Fig. 1 entnehmbar ist, weisen die Transport-Rollen 46 mittlere Führungsrollen 55 auf, die zur zentrierten Führung der Adapter-Platten 19 auf den verschiedenen Transport-Einrichtungen 42, 43, 49, 51 dienen. Hierzu weisen die Adapter-Platten 19 mit diesen mittleren Führungsrollen 55 zusammenwirkende, sich über mehrere Transport-Rollen 46 erstreckende mittlere Führungs-Schienen 56 auf. Diese Führungs-Schienen 56 haben außerdem den Zweck sicherzustellen, dass eine Adapter-Platte 19 nicht zwischen benachbarten Transport-Rollen 46 verkantet und verkeilt. Außerdem weisen die Adapter-Platten 9 seitliche Führungs-Schienen 56 auf, mittels derer eine Seitenführung an den Transport-Rollen 46 erfolgt. Schließlich weisen die Zuführ-Transport-Einrichtung 42 und die Speicher-Transport-Einrichtung 49 an ihren der Transport-Schiene 4 zugewandten Seiten Stopper 58 auf, die zum Abbremsen bzw. Halten einer Adapter-Platte 19 dienen.

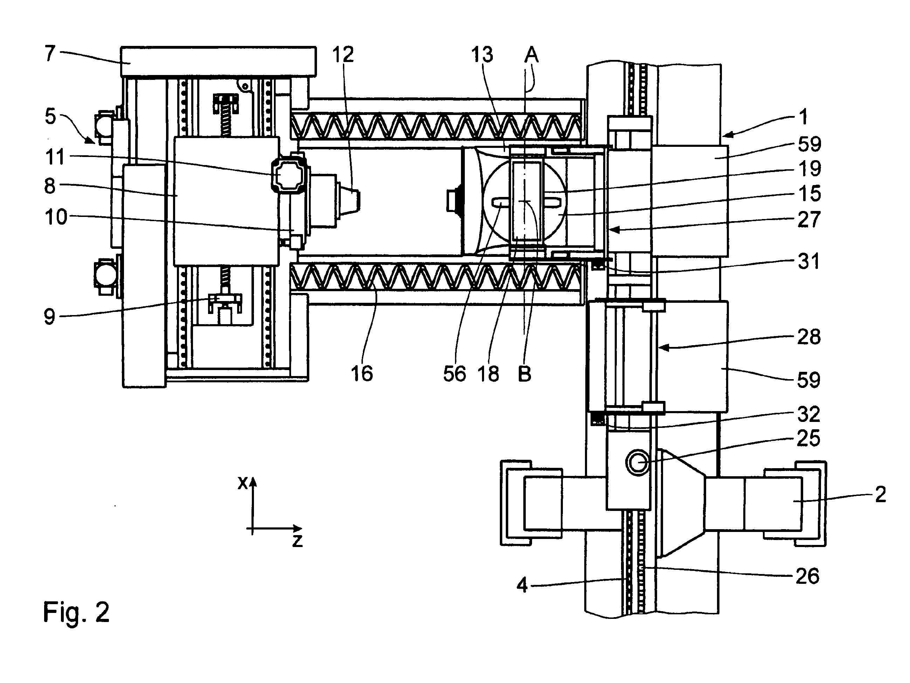

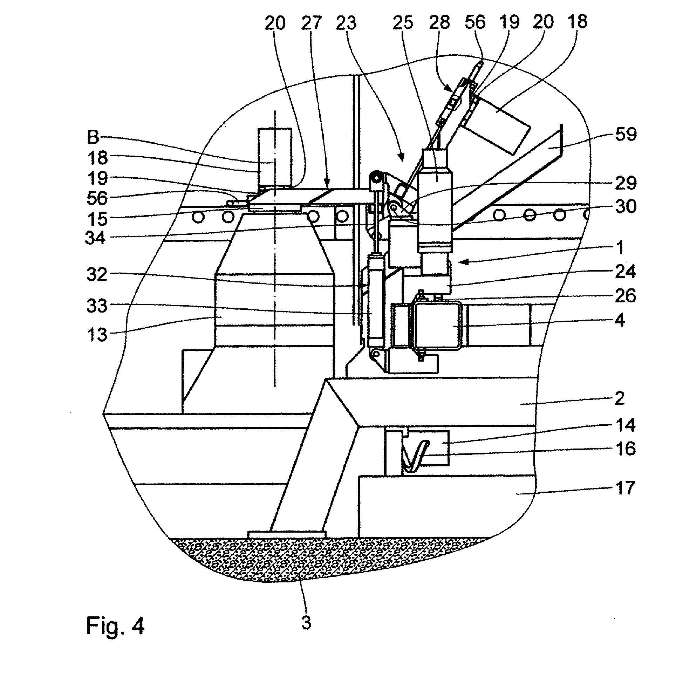

Wie Fig. 1, 2 und 4 entnehmbar ist, ist unterhalb des jeweiligen Werkstück-Greifers 27 bzw. 28 auf dem Lauf-Wagen 24 eine geneigt angeordnete Abtropf-Schale 59 angeordnet, durch die von bearbeiteten Werkstücken 18 abtropfende Kühlflüssigkeit oder Späne geordnet abgeführt werden können.

### Die Arbeitsweise ist wie folgt:

Über die Zuführ-Transport-Einrichtung 42 wird ein auf einem Werkstück-Träger 19 eingespanntes Werkstück 18 in Transport-Richtung 48 der Lade-Transport-Einrichtung 1 zugeführt. Die Lade-Einrichtung 23 befindet sich vor der Zuführ-Transport-Einrichtung 42, wobei der Werkstück-Greifer 28 sich in heruntergeschwenkter horizontaler Position unmittelbar oberhalb der Transport-Rollen 46 der Zuführ-Transport-Einrichtung 42 befindet. Der Werkstück-Greifer 27 befindet sich in dieser Position vor der Speicher-Transport-Einrichtung 49.

Durch den Transport der Adapter-Platte 19 mit einem zu bearbeitenden Werkstück 18 in Transport-Richtung 48 wird die Adapter-Platte 19 in der bereits geschilderten Weise in den gabelförmigen Werkstück-Greifer 28 hineingeschoben. Anschließend wird der auf diese Weise beladene Werkstück-Greifer 28 in seine hochgeschwenkte Lage geschwenkt. Wenn der jeweilige Positionier-Stift 40 noch nicht exakt an dem Anschlag 41 der Nut 38 anliegen sollte, dann wird diese exakte Anlage beim Hochschwenken des Werkstück-Greifers 28 erreicht. Bei dieser abschließenden Positionierung kann es sich nur um ein Verschieben um ein oder wenige Millimeter handeln. Mit diesen einfachen Mitteln wird also eine exakte Positionierung der Adapter-Platte 19 im Werkstück-Greifer 28 und damit auch wiederum eine exakte Lage relativ zu einem Werkstück-Schlitten 13 erreicht.

Danach wird die Lade-Einrichtung 23 vor eine Bearbeitungs-Maschine 5 verfahren. Der Werkstück-Schlitten 13 wird in seine der Lade-Transport-Einrichtung 1 benachbarte Position verfahren oder befindet sich bereits in dieser Position, die in Fig. 1 für die Bearbeitungs-Maschine 5 dargestellt ist. Danach wird der Werkstück-Greifer 28 in die waagerechte Position herabgeschwenkt, in der die Adapter-Platte 19 auf den Werkstück-Tisch 15 gelangt. Hier wird die Adapter-Platte 19 in der geschilderten Weise mittels der Nullpunkt-Spanner 21 festgespannt. Danach wird der Werkstück-Schlitten 13 mit der Adapter-Platte 19 und dem Werkstück 18 in Richtung zur Werkzeug-Spindel 12 der Bearbeitungs-Maschine 5 verfahren, und zwar in eine Position, wie sie in Fig. 1 für die Bearbeitungs-Maschine 6 dargestellt ist. Bei dieser Bewegung wird die Adapter-Platte 19 aus dem Werkstück-Greifer 28 herausgezogen.

An derselben Bearbeitungs-Maschine 5 oder einer anderen Bearbeitungs-Maschine 6 kann die Lade-Einrichtung 23 mittels des den Transport-Einrichtungen 42, 43 zugewandten Werkstück-Greifers 27, ein bearbeitetes Werkstück 18 übernehmen. Dies erfolgt in der Weise, dass die Lade-Einrichtung 23 vor der entsprechenden Bearbeitungs-Maschine 5, 6 positioniert und der Werkstück-Greifer 27 in seine horizontale Lage zur Bearbeitungs-Maschine 6 hin nach unten verschwenkt wird. Anschließend fährt der Werkstück-Schlitten 13 dieser Bearbeitungs-Maschine 5 oder 6 unter den Werkstück-Greifer 27. Hierdurch wird die auf dem Werkstück-Schlitten 13 befindliche Adapter-Platte 19 mit dem bearbeiteten Werkstück 18 in den Werkstück-Greifer 27 eingefahren. Die Verriegelung mittels des Nullpunkt-Spanners 21 wird geöffnet, sodass der Werkstück-Greifer 27 samt Adapter-Platte 19 und Werkstück 18 hochgeschwenkt werden kann.

Das bearbeitete Werkstück 18 wird anschließend entweder zu einer weiteren Bearbeitungs-Maschine zur weiteren Bearbeitung verfahren oder der Abführ-Transport-Einrichtung 43 zugeführt. Hierzu fährt die Lade-Einrichtung 23 mit dem Werkstück 18 vor die Speicher-Transport-Einrichtung 47. Dort wird der Werkstück-Greifer 27 mit der Adapter-Platte 19 und dem Werkstück 18 heruntergeschwenkt. Durch Antrieb der Transport-Rollen 46 dieser Speicher-Transport-Einrichtung 49 entgegen der Transport-Richtung 48 wird die Adapter-Platte 19 aus dem Werkstück-Greifer 27 herausgezogen. Gleichzeitig kann mittels des Werkstück-Greifers 28 ein auf der Zuführ-Transport-Einrichtung 42 zugeführtes, zu bearbeitendes Werkstück 18 in der geschilderten Weise aufgenommen werden. Die Lade-Einrichtung 23 verfährt wieder zu einer der Bearbeitungs- Maschinen 5, 6 und lädt dort das zu bearbeitende Werkstück 18 in der geschilderten Weise in die entsprechende Maschine 5, 6. Währenddessen fährt die Übergabe-Transport-Einrichtung 51 vor die Speicher-Transport-Einrichtung 49. Durch Antrieb der Transport-Rollen 46 der Speicher-Transport-Einrichtung 49 und der Übergabe-Transport-Einrichtung 51 wird die auf der Speicher-Transport-Einrichtung 49 zwischengelagerte bzw. zwischengespeicherte Adapter-Platte 19 mit dem bearbeiteten Werkstück 18 auf die Übergabe-Transport-Einrichtung 51 geschoben. Anschließend wird letztere mit der Adapter-Platte 19 bei nicht angetriebenen Transport-Rollen 46 vor die Abführ-Transport-Einrichtung 43 verfahren. Die Transport-Rollen 46 der Übergabe-Transport-Einrichtung 51 werden angetrieben, sodass die Adapter-Platte 19 mit dem bearbeiteten Werkstück 18 auf die Abführ-Transport-Einrichtung 43 geschoben und dort mittels der ständig angetriebenen Transport-Rollen 46 in Transport-Richtung 48 abtransportiert wird. Wie sich aus dem Vorstehenden ergibt, sind beide Werkstück-Greifer 27, 28 beim Verfahren der Lade-Einrichtung 23 hochgeschwenkt.

Grundsätzlich kann auf der Lade-Einrichtung 23 auch nur ein Werkstück-Greifer 27 bzw. 28 angeordnet sein. Zwei Werkstück-Greifer 27, 28 führen allerdings zu einer erheblichen Steigerung der Leistungsfähigkeit.

Der Betrieb wird üblicherweise so erfolgen, dass an einer Bearbeitungs-Maschine ein bearbeitetes Werkstück 18 mittels des Werkstück-Greifers 27 entnommen wird, anschließend der Lauf-Wagen 24 soweit verfahren wird, dass der benachbarte Werkstück-Greifer 28 mit einer Adapter-Platte 19 mit Werkstück 18 vor die Bearbeitungs-Maschine 5 oder 6 gelangt und ein zu bearbeitendes Werkstück 18 übergibt. Die Stillstandszeiten einer Bearbeitungs-Maschine 5 oder 6 werden dadurch minimiert.

Die Übergabe-Transport-Einrichtung 51 muss auch nicht zwingend einen eigenen Verfahr-Motor 53 aufweisen; sie kann mittels einer Stange mit dem Lauf-Wagen 24 der Lade-Einrichtung 23 starr verbunden sein, worüber dann auch die Verfahrbewegungen der Übergabe-Transport-Einrichtung 51 erzeugt werden.

Die Abführ-Transport-Einrichtung 43 muss nicht zwingend fluchtend zur Zuführ-Transport-Einrichtung 42 angeordnet sein; wenn es aber der Fall ist, dann kann nach Einfahren der Übergabe-Transport-Einrichtung 51 in die Lücke 54 zwischen der Zuführ-Transport-Einrichtung 42 und der Abführ-Transport-Einrichtung 43 auch einmal ein Werkstück 18 durchgefördert werden, ohne an eine der Bearbeitungs-Maschinen 5 bzw. 6 weitergegeben zu werden.

## Patentansprüche

1. Fertigungs-Anlage
- mit mehreren nebeneinander in einer Reihe angeordneten Bearbeitungs-Maschinen (5, 6),
- mit einer Lade-Transport-Einrichtung (1), die
-- eine die Bearbeitungs-Maschinen (5, 6) verbindende Transport-Schiene (4),
-- mindestens eine auf der Transport-Schiene (4) verfahrbare Lade-Einrichtung (23), und
-- mindestens einen auf der Lade-Einrichtung (23) angeordneten Werkstück-Greifer (27, 28) zur Beschickung der Bearbeitungs-Maschinen (5, 6) mit zu bearbeitenden Werkstücken (18) und zur Entnahme von bearbeiteten Werkstücken (18) aus den Bearbeitungs-Maschinen (5, 6) aufweist,
- mit einer Zuführ-Transport-Einrichtung (42) zur Zuführung von zu bearbeitenden Werkstücken (18) zur Lade-Transport-Einrichtung (1) in einer Transport-Richtung (48) quer zur Richtung der Transport-Schiene (4) und
- mit einer Abführ-Transport-Einrichtung (43) zum Abtransport bearbeiteter Werkstücke (18) von der Lade-Transport-Einrichtung (1) in einer Transport-Richtung (48) quer zur Richtung der Transport-Schiene (4), wobei
der mindestens eine Werkstück-Greifer (27, 28) zwischen einer abgesenkten Übergabe-Stellung und einer hochgeschwenkten Transport-Stellung verschwenkbar ausgebildet ist,
**dadurch gekennzeichnet, dass** der mindestens eine Werkstück-greifer um nur eine Schwenkachse (30) verschwenkbar ausgebildet ist,
dass die Zuführ-Transport-Einrichtung (42) und die Abführ-Transport-Einrichtung (43) unter Freilassung einer Lücke (54) an die Transport-Schiene (4) herangeführt sind,
dass entweder neben der Zuführ-Transport-Einrichtung (42) oder der Abführ-Transport-Einrichtung (43) eine Speicher-Transport-Einrichtung (49) angeordnet ist, und
dass eine Übergabe-Transport-Einrichtung (51) vorgesehen ist, die zwischen einer Übergabe-Position vor der Abführ-Transport-Einrichtung (43), einer Speicher-Position vor der Speicher-Transport-Einrichtung (49) und einer hiervon freien Ruhe-Position verfahrbar ist.

2. Fertigungs-Anlage nach Anspruch 1, **dadurch gekennzeichnet,**
**dass** der mindestens eine Werkstück-Greifer (27, 28) gabelförmig ausgebildet ist.

3. Fertigungs-Anlage nach Anspruch 2, **dadurch gekennzeichnet,**
**dass** Werkstück-Träger für die Werkstücke (18) vorgesehen sind, die seitliche Halte-Elemente aufweisen und
**dass** der mindestens eine gabelförmige Werkstück-Greifer (27, 28) zwei Arme (35, 36) mit zur Aufnahme der Halte-Elemente dienenden Nuten (38) aufweist.

4. Fertigungs-Anlage nach Anspruch 3, **dadurch gekennzeichnet,**
**dass** die Werkstück-Träger in einer horizontalen Lage des Werkstück-Greifers (27, 28) in diesen hineinschiebbar und aus diesem herausziehbar ist.

5. Fertigungs-Anlage nach einem der Ansprüche 1 bis 4, **dadurch gekennzeichnet,**
**dass** die Bearbeitungs-Maschinen (5, 6) einen quer zur Richtung der Transport-Schiene (4) verfahrbaren Werkstück-Schlitten (13) aufweisen.

6. Fertigungs-Anlage nach einem der Ansprüche 1 bis 5, **dadurch gekennzeichnet,**
**dass** auf der Lade-Einrichtung (23) zwei Werkstück-Greifer (27, 28) angeordnet sind.

7. Fertigungs-Anlage nach Anspruch 1, **dadurch gekennzeichnet,**
**dass** die Bearbeitungs-Maschinen (5, 6) in nur einer Reihe auf einer Seite der Transport-Schiene (4) angeordnet sind und
**dass** die Speicher-Transport-Einrichtung (49) auf dieser Seite neben der Zuführ-Transport-Einrichtung (42) angeordnet ist.

8. Fertigungs-Anlage nach Anspruch 1 oder 7, **dadurch gekennzeichnet,**
**dass** die Übergabe-Transport-Einrichtung (51) in ihrer Übergabe-Position vor der Abführ-Transport-Einrichtung (43) diese und die Zuführ-Transport-Einrichtung (42) miteinander verbindet.

9. Fertigungs-Anlage nach einem der Ansprüche 1 und 7 oder 8, **dadurch gekennzeichnet,**
**dass** die Zuführ-Transport-Einrichtung (42), die Abführ-Transport-Einrichtung (43), die Speicher-Transport-Einrichtung (49) und die Übergabe-Transport-Einrichtung (51) als mit antreibbaren Transport-Rollen (46) versehene Rollen-Transport-Einrichtungen ausgebildet sind.

10. Fertigungs-Anlage nach einem der Ansprüche 1 und 7 bis 9, **dadurch gekennzeichnet,**
**dass** die Übergabe-Transport-Einrichtung (51) auf der Transport-Schiene (4) verfahrbar angeordnet ist.

11. Fertigungs-Anlage nach einem der Ansprüche 1 und 6 bis 10, **dadurch gekennzeichnet,**
**dass** der Abstand der beiden Werkstück-Greifer (27, 28) dem Abstand der Zuführ-Transport-Einrichtung (42) von der Speicher-Transport-Einrichtung (49) entspricht.

## Claims

1. Production installation
- with several processing machines (5, 6) which are disposed next to each other in a row;
- with a loading transport means (1) which comprises
-- a transport rail (4) connecting the processing machines (5, 6),
-- at least one loading means (23) which is movable along the transport rail (4); and
-- at least one workpiece gripper (27, 28) disposed on the loading means (23) for supplying the processing machines (5, 6) with workpieces (18) to be processed and for removing processed workpieces (18) from the processing machines (5, 6);
- with a supply transport means (42) for supplying workpieces (18) to be processed to the loading transport means (1) in a transport direction (48) which is transverse to the direction of the transport rail (4), and
- with a discharge transport means (43) for unloading processed workpieces (18) from the loading transport means (1) in a transport direction (48) transverse to the direction of the transport rail (4), with the at least one workpiece gripper (27, 28) being pivotable between a lowered transfer position and a transport position which is pivoted upwards,
**characterized in**
**that** the at least one workpiece gripper is pivotable about only one pivot axis (30),
**that** the supply transport means (42) and the discharge transport means (43) are guided towards the transport rail (4), thereby leaving a gap (54),
**that** a storage transport means (49) is disposed next to either the supply transport means (42) or the discharge transport means (43), and
**that** a transfer transport means (51) is provided which is movable between a transfer position upstream of the discharge transport means (43), a storage position upstream of the storage transport means (49) and a rest position which is free thereof.

2. Production installation according to claim 1, **characterized in**
**that** the at least one workpiece gripper (27, 28) is fork-shaped.

3. Production installation according to claim 2, **characterized in**
**that** workpiece carriers are provided for the workpieces (18), said workpiece carriers comprising lateral retaining elements, and
**that** the at least one fork-shaped workpiece gripper (27, 28) comprises two arms (35, 36) having grooves (38) for receiving the retaining elements.

4. Production installation according to claim 3, **characterized in**
**that** the workpiece carriers are insertable into and removable from the workpiece gripper (27, 28) when the latter is in a horizontal position.

5. Production installation according to any one of claims 1 through 4,
**characterized in**
**that** the processing machines (5, 6) comprise a workpiece carriage (13) which is movable transversely with respect to the direction of the transport rail (4).

6. Production installation according to any one of claims 1 through 5,
**characterized in**
**that** two workpiece grippers (27, 28) are disposed on the loading means (23).

7. Production installation according to claim 1, **characterized in**
**that** the processing machines (5, 6) are disposed on one side of the transport rail (4) in only one row, and
**that** the storage transport means (49) is disposed on this side next to the supply transport means (42).

8. Production installation according to claim 1 or 7, **characterized in that** the transfer transport means (51), when positioned in its transfer position in front of the discharge transport means (43), connects said discharge transport means (43) to the supply transport means (42).

9. Production installation according to any one of claims 1 and 7 or 8,
**characterized in**
**that** the supply transport means (42), the discharge transport means (43), the storage transport means (49) and the transfer transport means (51) are formed as roller transport means having drivable transport rollers (46).

10. Production installation according to any one of claims 1 and 7 through 9, **characterized in**
**that** the transfer transport means (51) is disposed for displacement on the transport rail (4).

11. Production installation according to any one of claims 1 and 6 through 10, **characterized in**
**that** a distance between the two workpiece grippers (27, 28) corresponds to a distance between the supply transport means (42) and the storage transport means (49).

## Revendications

1. Ligne de production
- avec plusieurs machines de production (5, 6) alignées
les unes à côté des autres
- avec un dispositif de charge et transport (1), qui
présente
-- un rail de transport (4) reliant les machines de fabrication (5,6)
-- au moins un système de charge (23) déplaçable sur le rail de transport (4)
-- au moins un préhenseur (27, 28) situé sur le système de charge (23) pour l'approvisionnement des machines de production en pièces à usiner (18) et l'enlèvement des pièces usinées (18) des machines de production (5, 6)
- avec un dispositif de transport et d'approvisionnement (42) pour le transport de pièces à usiner (18) vers le dispositif de charge et de transport (1) dans un sens de transport (48) transversal au sens du rail de transport (4) et
- avec un dispositif de transport et d'enlèvement (43) pour l'extraction des pièces usinées (18) du dispositif de charge et de transport (1) dans un sens de transport (48) transversal au sens du rail de transport (4), où
au moins un préhenseur (27, 28) est pivotant sur seulement un axe de pivotement (30), **caractérisé en**
**ce que** le dispositif de transport et d'approvisionnement (42) et le dispositif de transport et d'enlèvement (43) sont introduits sur le rail de transport (4) par libération d'un intervalle (54),
**en ce qu'**un dispositif de transport et de stockage (49) est placé soit à côté du dispositif de transport et d'approvisionnement (42) soit à côté du dispositif de transport et d'enlèvement (43), et
**en ce qu'**il est prévu un dispositif de transport et de transfert (51) qui est déplaçable entre une position de transfert avant le dispositif de transport et d'enlèvement (43), une position de stockage avant le dispositif de transport et de stockage (49) et une position d'arrêt libre.

2. Ligne de production selon la revendication 1, **caractérisée**
**en ce qu'**au moins un préhenseur (27, 28) est en forme de fourche.

3. Ligne de production selon la revendication 1, **caractérisée**
**en ce que** pour les pièces à usiner (18), sont prévus des porte pièces présentant des éléments de retenue latéraux et
**en ce qu'**au moins un préhenseur en forme de fourche (27, 28) présente deux bras (35, 36)avec des fentes (38) servant à saisir les éléments de retenue.

4. Ligne de production selon la revendication 1, **caractérisée**
**en ce que** les porte pièces peuvent être enfoncés dans les préhenseurs (27, 28) dans une position horizontale et en être retirés.

5. Ligne de production selon l'une des revendications 1 à 4, **caractérisée en ce que** les machines de production (5, 6) présentent un chariot à pièce (13) déplaçable à la transversale du sens du rail de transport (4).

6. Ligne de production selon l'une des revendications 1 à 5, **caractérisée en ce que** deux préhenseurs (27, 28) sont placés sur le dispositif de charge (23).

7. Ligne de production selon la revendication 1, **caractérisée**
**en ce que** les machines de production (5, 6) sont disposés sur une seule rangée sur un côté du rail de transport (4) et en ce que le dispositif de transport et de stockage (49) est placé sur ce côté, près du dispositif de transport et d'approvisionnement (42).

8. Ligne de production selon la revendication 1 ou 7, **caractérisée en ce que** le dispositif de transport et de transfert (51), dans sa position de transfert, avant le dispositif de transport et d'enlèvement (43), relie ce dernier au dispositif de transport et d'approvisionnement (42).

9. Ligne de production selon l'une des revendications 1 et 7 ou 8, **caractérisée**
**en ce que** le dispositif de transport et d'approvisionnement (42), le dispositif de transport et d'enlèvement (43), le dispositif de transport et de stockage (49) et le dispositif de transport et de transfert (51) sont des dispositifs de transport et de roulement équipés de roulements de transport (46).

10. Ligne de production selon l'une des revendications 1 et 7 à 9, **caractérisée**
**en ce que** le dispositif de transport et de transfert (51) se déplace sur le rail de transport (4).

11. Ligne de production selon l'une des revendications 1 et 6 à 9, **caractérisée**
**en ce que** la distance entre les deux préhenseurs (27, 28) correspond à la distance entre le dispositif de transport et d'approvisionnement (42) et le dispositif de transport de stockage (49).
